Europäisches Patentamt

European Patent Office

Office européen des brevets

(11) Veröffentlichungsnummer: **0 305 584**
**A2**

## (12) EUROPÄISCHE PATENTANMELDUNG

(21) Anmeldenummer: 87114467.1

(22) Anmeldetag: 03.10.87

(51) Int. Cl.⁴: **B01D 53/34 , C03B 5/16 , C03B 5/235**

(30) Priorität: 29.08.87 EP 87112624

(43) Veröffentlichungstag der Anmeldung:
**08.03.89 Patentblatt 89/10**

(84) Benannte Vertragsstaaten:
**AT BE CH DE ES FR GB GR IT LI LU NL SE**

(71) Anmelder: **Himly, Holscher GmbH & Co.**
**Gr. Drakenburg Strasse 132**
**D-3070 Nienburg(DE)**

(72) Erfinder: **Krüger, Horant, Dipl.-Ing.**
**Marschblick 10**
**D-3070 Nienburg/Weser(DE)**

(74) Vertreter: **Meissner & Bolte Patentanwälte**
**Hollerallee 73**
**D-2800 Bremen 1(DE)**

(54) Verfahren zur Behandlung, insbesondere zur Neutralisation, von Abgasen.

(57)
1. Verfahren zur Behandlung von Abgasen.

2.1. Bei der Glasherstellung anfallende Abgase werden üblicherweise direkt an die Atmosphäre abgegeben. Das führt zu einer Umweltbelastung mit den in den Abgasen enthaltenen Schadstoffkomponenten. Der Erfindung geht es nun darum, die Abgase vor ihrer Einleitung in die Atmosphäre einer wirtschaftlichen Schadstoffreduktion zu unterziehen.

2.2. Das erfindungsgemäße Verfahren zur Schadstoffneutralisation sieht das Hindurchleiten der zu behandelnden Abgase durch ein wenigstens teilweise aus Altglas (Glasscherben 20) bestehendes Rohstoffgemenge (17) vor. Hierdurch werden einerseits die wesentlichen Schadstoffkomponenten der Abgase zumindest teilweise beseitigt und andererseits wird bei Abkühlung der Abgase eine Vorwärmung des Rohstoffgemenges (17) herbeigeführt.

2.3. Das erfindungsgemäße Verfahren eignet sich besonders zur Behandlung von Rauchgasen aus einer Glaschmelzwanne (10) bei der Glasherstellung.

Fig. 1

EP 0 305 584 A2

## Verfahren zur Behandlung, insbesondere Neutralisation, von Abgasen

Die Erfindung betrifft ein Verfahren zur Behandlung von Abgasen aus der Glasherstellung, insbesondere zur Neutralisation von Rauchgasen aus einer Glasschmelzwanne.

Aufgrund der zunehmenden Umweltverschmutzung und des steigenden Umweltbewußtseins werden strengere Anforderungen in bezug auf die Beseitigung von Schadstoffen aus in die Atmosphäre weitergeleiteten Abgasen gestellt. Dies trifft besonders auch für Abgase bei der Glasherstellung zu. Bisher werden diese Abgase, nämlich Rauchgase aus der Öl- oder Gasbefeuerung von Schmelzöfen, in Regenerativ-Wärmetauschern auf etwa $400°$ - $500°$ C abgekühlt und dann in der Regel ohne weitere Abgasreinigung in die Atmosphäre abgeleitet. Dadurch wird die Atmosphäre mit in in den Abgasen (Rauchgasen) enthaltenen Schadstoffkomponenten, beispielsweise HCL, HF, $SO_2$, $SO_3$, CO und $NO_x$, belastet.

Der Erfindung liegt nun die Aufgabe zugrunde, ein Verfahren zu schaffen, welches eine einfache (wirtschaftliche) Behandlung der in die Atmosphäre abzugebenden Abgase, insbesondere eine Neutralisation zumindest der besonders bedenklichen Schadstoffkomponenten, ermöglicht.

Zur Lösung dieser Aufgabe ist das erfindungsgemäße Verfahren dadurch gekennzeichnet, daß die Abgase durch ein wenigstens teilweise aus Altglas (Glasscherben) bestehendes Rohstoffgemenge geleitet werden. Hierbei hat sich überraschend gezeigt, daß das Rohstoffgemenge die Schadstoffkomponenten in den Abgasen zumindest teilweise eliminiert. Insbesondere erfolgt eine Elimination der Schadstoffkomponenten durch das im Rohstoffgemenge enthaltene Altglas aus vorzugsweise einem Glasscherbengemisch. Dabei können im Abgas enthaltene Schadstoffe, wie HCL, HF, $SO_2$, $SO_3$, CO und ggf. $NO_x$, ganz oder teilweise aus dem Abgas durch Neutralisation eliminiert werden.

Darüber hinaus ist das erfindungsgemäße Verfahren besonders wirtschaftlich, weil gleichzeitig mit der Behandlung der Abgase eine Vorwärmung des Rohstoffgemenges auf etwa $250°$ - $350°$ C (ausgehend von der Umgebungstemperatur) stattfindet. Somit läßt sich die im Abgas enthaltene Restenergie noch sinnvoll nutzen, indem die Abgase nur noch mit etwa einer Resttemperatur vom $180°$ - $220°$ C (gegenüber von bisher $400°$ - $500°$ C) in die Atmosphäre eingeleitet werden.

Weiterhin vorteilhaft am erfindungsgemäßen Verfahren ist, daß zur Neutralisation keine dem Glasherstellungsprozeß artfremden Neutralisationsmittel erforderlich sind.

Nach einem weiteren Vorschlag der Erfindung erfolgt ein Hindurchleiten der Abgase durch ein Festbett des Rohstoffgemenges, und zwar zweckmäßigerweise im Kreuz-Gegenstrom. Dies ermöglicht einen besonders intensiven Kontakt zwischen den zu behandelnden Abgasen und dem Rohstoffgemisch, insbesondere der Glasscherben des Altglasgemisches. Auch wird hierdurch erreicht, daß das Hindurchleiten der Abgase durch das Rohstoffgemisch keinen erheblichen zusätzlichen Energieaufwand erforderlich macht, da das Rohstoffgemisch in einem silo- bzw. bunkerartigen Behälter während der Behandlung des Abgases unterbringbar ist, in dem durch ein an der Unterseite erfolgendes Abziehen des Rohstoffgemisches und ein entsprechendes von oben her erfolgendes Füllen des Behälters ein im Normalfall gleichmäßiger, allmählicher Durchfluß des Glasscherbengemisches durch denselben erfolgt. Dieses trägt dazu bei, daß ein intensiver Kontakt des Rohstoffgemisches mit den zu behandelnden Abgasen erfolgt, was dazu führt, daß einerseits die Schadstoffe in den Abgasen gleichmäßig eliminiert werden und andererseits ein homogen vorgewärmtes Rohstoffgemisch aus dem Behälter entnommen werden kann. Schließlich beugt die allmähliche Abwärtsbewegung des Rohstoffgemisches im Behälter der Gefahr einer Verstopfung weitestgehend vor.

Weiterhin wird vorgeschlagen, das aus dem Behälter für das Rohstoffgemenge austretende (neutralisierte) Abgas physikalisch weiterzubehandeln, nämlich die darin enthaltenen (staubförmigen) Feststoffpartikel auszufiltern. Diese Weiterbehandlung ermöglicht es, von den Abgasen beim Hindurchleiten durch das Rohstoffgemenge mitgerissene Kleinstpartikel, beispielsweise kleine Glasscherben-Bruchstücke, aus den Abgasen zu entfernen, bevor diese an die Atmosphäre abgeleitet werden. Die so ausgefilterten Feststoffpartikel können weiterverwendet werden, indem diese ähnlich wie das vorgewärmte Rohstoffgemenge zum Glasschmelzofen oder in Behälter zurückgeführt werden.

Zur Elimination der Feststoffpartikel aus dem (abgekühlten) Abgas eignen sich besonders Elektrofilter. Dabei finden bevorzugt mehrere hintereinandergeschaltete Elektrofilter unterschiedlicher elektrischer Felder Verwendung. Hierbei hat sich überraschend gezeigt, daß die in den einzelnen Elektrofiltern mit unterschiedlichen elektrischen Feldern abgeschiedenen Staubpartikel unterschiedliche chemische Anreicherungen, die in erster Linie von der Neutralisation im Rohstoffgemenge stammen, aufweisen. Demzufolge kann gegebenenfalls die Weiterverarbeitung der abgeschiedenen Partikel aus dem jeweiligen Elektrofilter unterschiedlich erfolgen.

Schließlich wird vorgeschlagen, zwischen dem Elektrofilter bzw. den Elektrofiltern und dem Behälter zum Hindurchströmen der zu neutralisierenden Abgase einen Kühler anzuordnen, der die das Rohstoffgemenge verlassenden Abgase vor Eintritt in den Elektrofilter noch weiter abkühlt. Durch diese Maßnahme kann die Effektivität der Staubabschaltung im Elektrofilter erhöht werden. Es ist auch denkbar, dem Kühler eine Naß- oder Trockenabscheidung, insbesondere chemischer Natur, zur gezielten Beseitigung besonderer Schadstoffe aus dem Abgas zuzuordnen. Dies gilt insbesondere dann, wenn kurzfristig keine Abkühlung und Neutralisation der Abgase im erfindungsgemäß vorgesehenen Behälter erfolgen kann, beispielsweise bei Störungen im oder am Behälter.

Das erfindungsgemäße Verfahren wird nachfolgend anhand eines in den Zeichnungen dargestellten Anlagenbeispiels näher erläutert.

Es zeigen:

Fig. 1 ein Anlagenschema zur Durchführung des erfindungsgemäßen Verfahrens,

Fig. 2 einen Bunker zur Neutralisation des Abgases in einem Rohstoffgemenge in perspektivischer Darstellung, und

Fig. 3 einen Querschnitt durch den mit dem Glasscherbengemenge gefüllten Bunker gemäß der Fig. 2.

Das erfindungsgemäße Verfahren wird nachfolgend anhand einer Anlage zur Glasherstellung beschrieben.

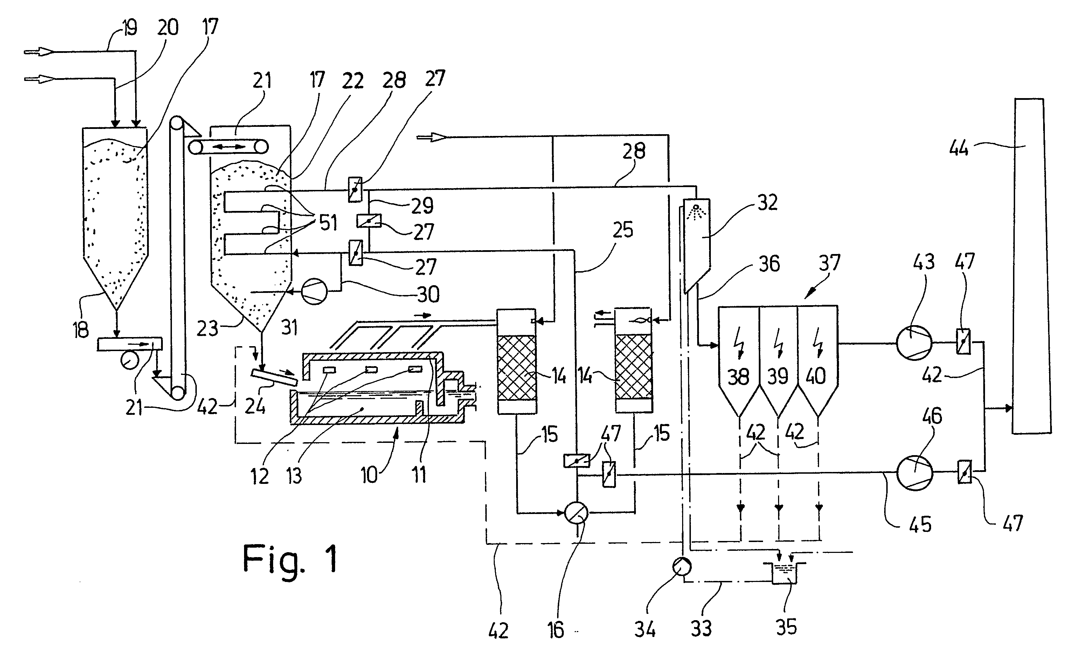

Die in Fig. 1 gezeigte Anlage verfügt über eine Glasschmelzwanne 10, die in ihrem Deckengewölbe 11 Brenner 12 zum Erhitzen der in der Glasschmelzwanne 10 befindlichen Glasschmelze 13 aufweist. Die Brenner 12 werden üblicherweise gespeist durch zwei abwechselnd betriebene Regeneratoren 14, die öl- oder gasbefeuert sind.

Die Abgase aus der Glasschmelzwanne 10 werden wiederum durch die abwechselnd betriebenen Regeneratoren 14 geleitet zur Vorwärmung frischer Verbrennungsluft. Die Abgasleitungen 15 beider Regeneratoren 14 werden zu einem Steuerventil 16 geführt, von wo aus eine Weiterleitung der Abgase in einer weiter unten beschriebenen Weise erfolgt.

Zur Bildung der Glasschmelze 13 wird der Glasschmelzwanne 10 ein Rohstoffgemenge 17 zugeführt. Dieses setzt sich zusammen aus einem Gemenge (frischer) Rohstoffe für die Glasherstellung und Altglas, nämlich insbesondere Glasscherben 20. Der Anteil der Glasscherben 20 bzw. eines Glasscherbengemenges, kann bis zu 90 % des Rohstoffgemenges 17 betragen.

Einem Zwischenbunker 18 werden hier zur Bildung des Rohstoffgemenges 17 das (frische) Gemenge 19 und die Glasscherben 20 zugeführt.

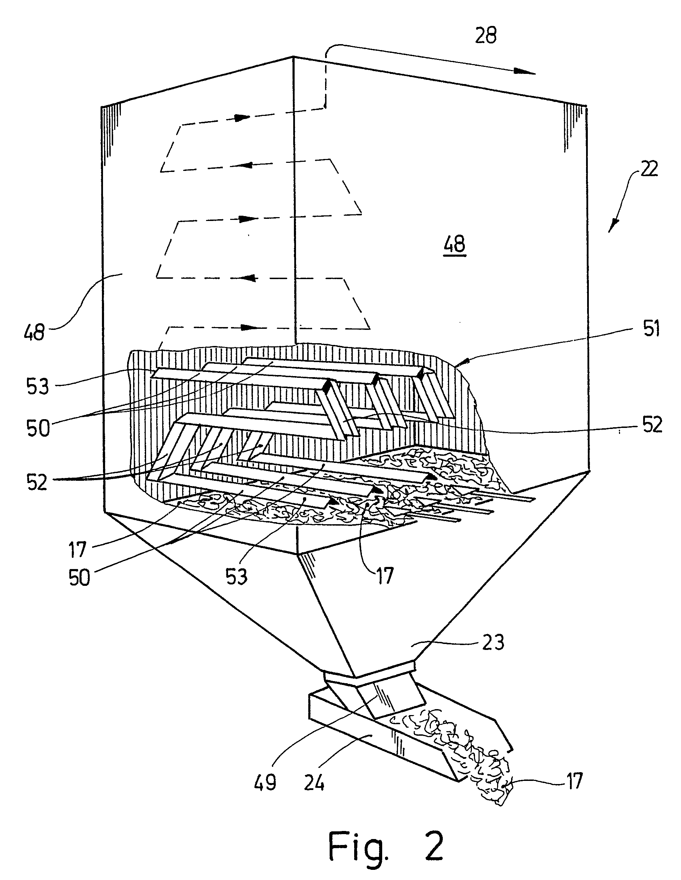

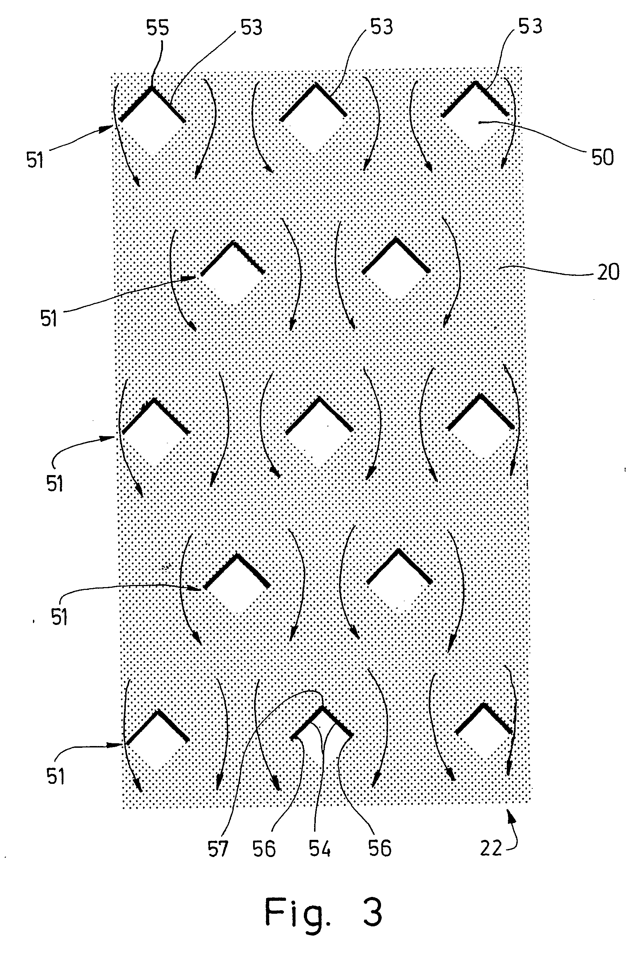

Dabei kann im Zwischenbunker 18 eine Vermischung des Gemenges 19 mit den Glasscherben 20 erfolgen. Das dabei entstehende, weitestgehend homogene Rohstoffgemenge 17 wird dann über eine Kette mehrerer in der Fig. 1 schematisch dargestellter Förderer 21 zur Oberseite eines dem Zwischenbunker 18 nachgeordneten Bunkers geleitet, der hier als Vorwärmbunker 22 ausgebildet ist. Diesen weiter unten anhand der Fig. 2 und 3 näher erläuterten Vorwärmbunker 22 verläßt das vorgewärmte Rohstoffgemenge 17 an einem unteren Auslauftrichter 23, aus dem das Rohstoffgemenge 17 über einen weiteren Förderer 24 in die Glasschmelzwanne 10 gelangt.

Erfindungsgemäß werden die aus den Regenatoren 14 kommenden Abgase von Steuerventil 16 aus über eine Zuführleitung 25 in den unteren Bereich des Vorwärmbunkers 22 geleitet. In aufsteigender Richtung, nämlich im Kreuz-Gegenstrom, wird das Abgas in mehreren Etagen (Kanalebenen) durch den Vorwärmbunker 22 geleitet, wobei das Abgas im oberen Bereich den Vorwärmbunker 22 wieder verläßt.

Beim Durchströmen des Vorwärmbunkers 22 durch das Abgas erfolgt zum einen eine Neutralisation des Abgases, indem vorzugsweise bei der Verbrennung in der Glasschmelzwanne 10 im Abgas entstehende Schadstoffkomponenten, nämlich HCL, HF, $SO_2$, $SO_3$, CO und $NO_x$, ganz oder zumindest soweit reduziert werden, daß der noch verbleibende Anteil dieser Schadstoffkomponenten unter den gesetzlichen vorgeschriebenen Grenzwerten liegt. Des weiteren erfolgt eine Abkühlung des Abgases bei der Hindurchströmung durch den Vorwärmbunker 22 von einer zwischen 400° - 500° C liegenden Eingangstemperatur auf eine Ausgangstemperatur von etwa 140° - 180° C. Das von oben nach unten allmählich durch den Vorwärmbunker 22 hindurchgeleitete Rohstoffgemenge 17 wird hierbei durch die Abgase von Raumtemperatur auf etwa 250° - 300° C vorgewärmt.

Die aus dem Vorwärmbunker 22 austretenden Abgase können durch entsprechende Steuerventile 27 in der Zufuhrleitung 25, in einer Ableitung 28 für die Abgase aus dem Vorwärmbunker 22 und einer Verbindungsleitung 29 zwischen der Zufuhrleitung 25 und der Ableitung 28 so gesteuert werden, daß die Abgase unter Umgehung des Vorwärmbunkers 22 direkt ableitbar sind, falls eine kurzfristige Betriebsstörung im Vorwärmbunker 22 eintreten sollte. Des weiteren ist im vorliegenden Ausführungsbeispiel der Zufuhrleitung 25 eine Bypassleitung 30 zugeordnet, die unterhalb der Zufuhrleitung 25 im Vorwärmbunker 22 mündet und die ein Gebläse 31 zum druckbeaufschlagten Einleiten des über die Bypassleitung 30 in den Vorwärmbunker 22 gelangenden Abgases ermöglicht zur Aufrechterhaltung einer Aufrechtströmung der Abgase im Vorwärmbunker 22.

Die endgültige Abfuhr entsprechend neutralisierter und abgekühlter Abgase erfolgt bei geschlossenem Steuerventil 27 in der Verbindungsleitung 29 über die Ableitung 28 zu einem sich daran im vorliegenden Ausführungsbeispiel anschließenden Kühler 32. In diesem erfolgt eine weitere Abkühlung der Abgase, indem diese im Kühler 32 mit Wasser oder chemische Zusätze enthaltendem Wasser berieselt werden. Das Wasser wird dabei durch eine Umwälzpumpe 34 in einem geschlossenem Wasserkreislauf 33 (strichpunktiert) durch ein zur Abkühlung des im Kühler 32 aufgeheizten Wassers dienendes Reservoir 35 umgewälzt. Insbesondere dient der Kühler 32 auch zur vollständigen Abkühlung der bei Betriebsstörungen im Vorwärmbunker 22 kurzzeitig direkt über die Verbindungsleitung 29 und die Ableitung 28 zum Kühler 32 geleiteten (heißen) Abgase. In diesem Falle kann durch chemische Zusätze im Wasser des Kühlers 32 ersatzweise die dann nicht im Vorwärmbunker 22 erfolgende Neutralisation der Abgase durchgeführt werden.

Vom Kühler 32 aus gelangen schließlich die Abgase zu einer Elektrofilteranlage 37. Diese besteht im vorliegenden Ausführungsbeispiel aus drei hintereinander angeordneten Elektrofiltern 38, 39, 40 an sich bekannter Bauart. In diesen Elektrofiltern 38..40 erfolgt eine (Trocken-)Ausscheidung von kleinen Feststoffpartikeln in den Abgasen. Insbesondere handelt es sich hierbei um kleinste Scherbenpartikel aus dem Vorwärmbunker 22, die beim Hindurchleiten der Abgase durch denselben mitgerissen werden.

Durch unterschiedliche elektrische Felder in den einzelnen Elektrofiltern 38..40 erfolgt - wie sich überraschend gezeigt hat - eine Abscheidung von Feststoffpartikeln (Staub) aus den Abgasen, derart, daß Feststoffpartikel mit unterschiedlichen Eigenschaften, insbesondere chemischer Zusammensetzung, an bestimmten Elektrofiltern 38, 39 bzw. 40 abgeschieden werden.

Im vorliegenden Ausführungsbeispiel ist den drei Elektrofiltern 38, 39 und 40 eine Rückführleitung 42 (gestrichelt) zugeordnet, durch die die ausgeschiedenen Feststoffpartikel (Staub) zurückgeführt werden können, und zwar im vorliegenden Ausführungsbeispiel zum Förderer 24, der auch zur Abgabe des aus dem Vorwärmbunker 22 abgezogenen vorgewärmten Rohstoffgemenges 17 zur Glasschmelzwanne 10 dient.

Den Elektrofiltern 38..40 nachgeschaltet ist hier ein Saugzuggebläse 43, das die erfindungsgemäß behandelten Abgase mit Überdruck durch eine Rückführleitung 42 in einen entsprechenden Kamin 44 leitet, durch den die Abgase der Atmosphäre zuführbar sind.

Der Fig. 1 ist noch zu entnehmen, daß oberhalb des Steuerventils 16 von der Zufuhrleitung 25 des Abgases zum Vorwärmbunker 22 eine weitere Bypassleitung 45 abzweigt, die über ein zwischengeschaltetes weiteres Saugzuggebläse 46 direkt in dem Kamin 44 mündet. Hierdurch ist es möglich, den Glasschmelzprozeß in der Glasschmelzwanne 10 kurzfristig weiterzubetreiben, wenn aus irgendwelchen Gründen eine Ableitung der Abgase durch den Vorwärmbunker 22 nicht möglich ist. Gesteuert wird diese Umleitung der Abgase durch entsprechende Steuerventile 47 in der Zufuhrleitung 25, der Bypassleitung 45 und der Rückführleitung 42.

Die Fig. 2 zeigt detailliert den Vorwärmbunker 22, der - wie sich gezeigt hat - sich besonders zur Durchführung des erfindungsgemäßen Verfahrens eignet. Demnach verfügt der Vorwärmbunker 22 über einen etwa quadratischen Querschnitt aus vier aufrechten Seitenwänden 48. Im unteren Bereich ist der Vorwärmbunker 22 trichterförmig verengt zum Auslauf 49 hin. Im Hauptteil des Vorwärmbunkers 22 befindet sich eine Vielzahl horizontaler Strömungskanäle 50. Diese befinden sich in übereinanderliegenden, horizontalen Kanalebenen 51. Im vorliegenden Ausführungsbeispiel sind acht Kanalebenen 51 aus jeweils drei Strömungskanälen 50 im Vorwärmbunker 22 gebildet. Dabei sind die Strömungskanäle 50 der angrenzenden Kanalebenen 51 versetzt zueinander angeordnet, liegen nämlich auf "Lücke". Dadurch sind die Strömungskanäle 50 annähernd gleichmäßig auf den Innenraum des Vorwärmbunkers 22 verteilt. Verbunden sind die Strömungskanäle 50 durch im Inneren des Vorwärmbunkers 22 angeordnete Überströmkanäle 52, die hier aus mit den entsprechenden Seitenwänden 48 verbundenen V-Profilen bestehen.

Jeder Strömungskanal 50 ist im vorliegenden Ausführungsbeispiel etwa gleich ausgebildet, und zwar in besonders einfacher Weise aus einem länglichen, gleichschenkligen Winkelprofil 53. Wie besonders deutlich die Fig. 3 zeigt, ist die Anordnung der Winkelprofile 53 für die Strömungskanäle 50 derart getroffen, daß die beiden gleichlangen Schenkel 54 unter einem gleichen Winkel liegen, nämlich unter ca. 45°, wobei eine Scheitelkante 55 oben liegt. Die beiden parallelen, unteren freien Kanten 56 der Schenkel 54 liegen damit etwa in einer horizontalen Ebene, nämlich der Kanalebene 51. Aufgrund dieser Ausbildung und Anordnung der Strömungskanäle 50 im Vorwärmbunker 22 bilden sie ein Dach für das Rohstoffgemenge 17, unter dem sich ein Schüttkegel im Rohstoffgemenge 17 ausbildet. Somit entstehen, wie ebenfalls die Fig. 3 anschaulich zeigt, Strömungskanäle 50 mit etwa quadratischem Querschnitt, wobei die Begrenzungsflächen der unteren Hälfte jedes Strömungskanals 50 unmittelbar durch das Rohstoffgemenge 17 gebildet wird. Dadurch ist ein optimaler Stoffübergang zwischen den durch die Strömungskanäle 50 geleiteten Abgasen und dem Rohstoffgemenge 17 zur Herbeiführung einerseits der Reduktion der Abgase und andererseits der Vorwärmung des Rohstoffgemenges 17 gegeben.

In der Fig. 3 ist ferner durch Pfeile 57 die abwärts gerichtete Fließrichtung des Rohstoffgemenges 17 im Vorwärmbunker 22 dargestellt. Demnach umströmt das Rohstoffgemenge 17 gleichmäßig längs eines etwa S-förmigen Verlaufs die Strömungskanäle 50 unterschiedlicher Kanalebenen 51. Dabei wechseln diejenigen Anteile des Rohstoffgemenges 17, die die unteren Begrenzungsflächen der Strömungskanäle 50 bilden ständig ab, was sich fördernd auf eine homogene Vorwärmung des Rohstoffgemenges 17 und eine zuverlässig Reduktion der Abgase auswirkt, da diese stets mit "frischem" Rohstoffgemenge 17 in Kontakt geraten.

**Ansprüche**

1. Verfahren zur Behandlung von Abgasen aus der Glasherstellung, insbesondere zur Neutralisation von Rauchgasen aus einer Glasschmelzwanne (10),
**dadurch gekennzeichnet,** daß die Abgase durch ein wenigstens teilweise aus Altglas (Glasscherben 20) bestehendes Rohstoffgemenge (1 7) geleitet werden.

2. Verfahren nach Anspruch 1, dadurch gekennzeichnet, daß das Abgas beim Hindurchleiten durch das Rohstoffgemenge (17) allmählich abgekühlt wird.

3. Verfahren nach Anspruch 2, dadurch gekennzeichnet, daß das Abgas beim Hindurchleiten durch das Rohstoffgemenge (17) von etwa 400° - 500° C auf etwa 180° - 220° C abgekühlt wird.

4. Verfahren nach Anspruch 1 sowie einem oder mehreren der weiteren Ansprüche, dadurch gekennzeichnet, daß das Abgas durch ein Festbett des Rohstoffgemenges (17) geleitet wird.

5. Verfahren nach Anspruch 4, dadurch gekennzeichnet, daß das Festbett des Rohstoffgemenges (17) in einem Bunker (Vorwärmbunker 22) gebildet wird, in dem sich das Rohstoffgemenge (17) durch untere Entnahme langsam, insbesondere kontinuierlich abwärts bewegt, wobei der Bunker (Vorwärmbunker 22) ober wieder entsprechend aufgefüllt wird.

6. Verfahren nach Anspruch 1 sowie einem oder mehreren der weiteren Ansprüche, dadurch gekennzeichnet, daß das Rohstoffgemenge (17) im Kreuz-Gegenstrom von den Abgasen durchströmt wird, wobei insbesondere HCL, HF, SO$_2$, SO$_3$, CO und/oder NO$_x$ im Abgas neutralisiert werden.

7. Verfahren nach Anspruch 1 sowie einem oder mehreren der weiteren Ansprüche, dadurch gekennzeichnet, daß das Rohstoffgemenge (17) beim Hindurchleiten der abzuleitenden Abgase von Umgebungstemperatur auf etwa 250° - 300° C erwärmt wird.

8. Verfahren anch Anspruch 1 sowie einem oder mehreren der weiteren Ansprüche, dadurch gekennzeichnet, daß aus dem Abgas die darin enthaltenen Feststoffpartikel (Staub), insbesondere aus dem Altglas (Glasscherben 20) im Rohstoffgemenge (17), nach dem Hindurchleiten des Abgases durch das Rohstoffgemenge (17) ausgefiltert werden.

9. Verfahren nach Anspruch 8, dadurch gekennzeichnet, daß zur Elimination der Feststoffpartikel (Staub) aus dem (ab gekühlten) Abgas mindestens ein Elektrofilter (38..41) verwendet wird.

10. Verfahren nach Anspruch 9, dadurch gekennzeichnet, daß die am Elektrofilter (38..41) ausgeschiedenen Feststoffpartikel (Staub) unmittelbar weiterverarbeitet werden, insbesondere der Glaschmelzwanne (10) wieder zugeführt werden.

11. Verfahren nach Anspruch 9 oder 10, dadurch gekennzeichnet, daß bei Verwendung mehrerer Elektrofilter (38..41) unterschiedlicher elektrischer Felder von den in den unterschiedlichen Elektrofiltern (38..41) ausgefilterten Feststoffpartikel nur diejenigen mit geringerem Schadstoffanteil (aus einem oder mehreren bestimmten Elektrofiltern 38..41) der Glasschmelzwanne (10) zur Weiterverarbeitung zugeführt werden.

12. Verfahren nach Anspruch 8 sowie einem oder mehreren der weiteren Ansprüche, dadurch gekennzeichnet, daß das mit Feststoffpartikel angereicherte Abgas nach dem Hindurchleiten durch das Rohstoffgemenge (17) und vor dem Einleiten in den bzw. die Elektrofilter (38..41) durch einen Kühler (32) hindurchgeleitet wird.

13. Verfahren nach Anspruch 12, dadurch gekennzeichnet, daß das Abgas im Kühler (32) mit einem Flüssigkeitsnebel beaufschlagt wird, der vorzugsweise mit (chemischen) Zusätzen zur eventuell erforderlichen (konventionellen) Behandlung des Abgases versehen ist, beispielsweise bei einem kurzfristig erforderlichen Umfahren des Vorwärmbunkers (22).

Fig. 1

Fig. 2

Fig. 3